# EUROPÄISCHE PATENTSCHRIFT

(11) **EP 1 428 714 B1**
(45) Veröffentlichungstag und Bekanntmachung des Hinweises auf die Patenterteilung: **08.11.2006**
(21) Anmeldenummer: 03024627.6
(22) Anmeldetag: 27.10.2003
(51) Int. Cl.: B60K 26/02, G05G 1/14

(54) **Fahrpedalmodul**
Accelerator pedal module
Pédale d'accélérateur modulaire

(30) Priorität: 13.12.2002 DE 10258285
(43) Veröffentlichungstag der Anmeldung: 16.06.2004
(73) Patentinhaber: ROBERT BOSCH GMBH, 70442 Stuttgart (DE)
(72) Erfinder: Solta, Rostislava, 46331 Chrastawa (CZ)

(56) Entgegenhaltungen:
- DE-C- 19 531 735
- US-A- 5 241 936
- US-A1- 2002 046 616
- PATENT ABSTRACTS OF JAPAN vol. 2000, no. 26, 1. Juli 2002 (2002-07-01) -& JP 2001 260696 A (DENSO CORP), 26. September 2001 (2001-09-26)
- PATENT ABSTRACTS OF JAPAN vol. 2000, no. 08, 6. Oktober 2000 (2000-10-06) -& JP 2000 136736 A (HONDA MOTOR CO LTD), 16. Mai 2000 (2000-05-16)
- PATENT ABSTRACTS OF JAPAN vol. 2000, no. 03, 30. März 2000 (2000-03-30) -& JP 11 343882 A (DENSO CORP), 14. Dezember 1999 (1999-12-14)

## Beschreibung

### Stand der Technik

Die Erfindung geht aus von einem Fahrpedalmodul zum Steuern der Leistung einer Antriebsmaschine, insbesondere einer Brennkraftmaschine eines Fahrzeugs, mit einem an einem Lagerbock um eine Schwenkachse drehbar gehaltenen Pedalhebel, welcher eine mit der Schwenkachse koaxiale Sensorwelle eines Drehsenors betätigt, gemäß dem Oberbegriff von Anspruch 1.

Ein solches Fahrpedalmodul ist in der DE 195 31 735 C1 beschrieben. Bei dem bekannten Fahrpedalmodul ist eine Geberwelle des Drehsensors in einer Gleitbuchse drehgelagert, die innerhalb einer Lagerhülse gehalten ist. Der Lagerhülse und einer radial inneren Umfangswand einer Lagerbohrung des Pedalhebels sind wiederum Schlaufen von zwei Seilzügen zwischengeordnet, welche mit Rückzugfedern gekoppelt sind, die zum Rückstellen des Pedalhebels in eine Leerlaufposition dienen. Diese Anordnung ist jedoch komplex und teuer in der Herstellung. Außerdem ergibt sich eine Anzahl von toleranzbehafteten Trennfugen zwischen den radial ineinander gesteckten Bauelementen, was sich nachteilig auf die Steifigkeit der Lagerung der Geberwelle und demzufolge auf die Meßgenauigkeit des Drehsensors auswirkt.

Diese Nachteile werden durch einen Fahrpedalmodul zum steuern der Leistung einer Antriebsmaschine gemäß Anspruch 1 behoben.

### Vorteile der Erfindung

Erfindungsgemäß wird vorgeschlagen, dass zumindest ein Teil der Sensorwelle unmittelbar in einer Lagerbohrung eines mit dem Lagerbock einstückigen Lagerbereichs drehgelagert ist, von welchem zumindest ein Teil der radial äußeren Umfangsfläche wenigstens eine Lagerfläche für den Pedalhebel bildet. Unter "unmittelbar drehgelagert" soll ein direkter Kontakt der Sensorwelle mit der Lagerbohrung verstanden werden, d.h. ohne Zwischenordnung von Buchsen. Dann ergibt sich wegen des Vorhandenseins nur einer einzigen Trennfuge eine steife Drehlagerung, wodurch Lage- und insbesondere Winkelfehler der Sensorwelle reduziert werden. Da die Sensorwelle das mechanische Übertragungsglied der durch den Pedalhebel vorgegebenen Weginformation auf den elektrischen Teil des Drehsensors darsteilt, wirkt sich diese Maßnahme positiv auf die Meßgenauigkeit des Drehsensors aus. Außerdem ist die Drehlagerung der Sensorwelle auf einfache und kostengünstige Weise zu fertigen, weil sie aus lediglich zwei Teilen, nämlich der Sensorwelle und dem Lagerbereich des Lagerbocks besteht. Zur Reduzierung der Fertigungskosten und zur Erhöhung der Lagersteifigkeit trägt außerdem die einstückige Ausbildung des Lagerbereichs mit dem Lagerbock bei, weil keine toleranzbehafteten und nachgiebigen Trennfugen vorhanden sind.

Durch die in den Unteransprüchen aufgeführten Maßnahmen sind vorteilhafte Weiterbildungen und Verbesserungen der im Patentanspruch 1 angegebenen Erfindung möglich.

In bevorzugter Weise wird der Lagerbereich durch einen mit der Schwenkachse koaxialen Hohlzapfen des Lagerbocks gebildet. Indem der Hohlzapfen durch seine Lagerbohrung eine radiale innere Lagerfläche zur unmittelbaren Lagerung der Sensorwelle und gleichzeitig eine radial äußere Lagerfläche zur Lagerung des Pedalhebels bereitstellt, erfüllt er in vorteilhafter Weise eine kostensparende Doppelfunktion.

Gemäß einer Weiterbildung sind an der radial äußeren Umfangsfläche des Hohlzapfens mehrere teilzylindrische Lagerflächen unterschiedlichen Durchmessers ausgebildet, welche komplementären, mit der Schwenkachse koaxialen und teilzylindrischen Lagerflächen des Pedalshebels zugeordnet sind. Aufgrund der gestuften Ausführung der Lagerflächen ergibt sich eine in Bezug zur Lagersteifigkeit günstige seitliche Führung des Pedalhebels am Lagerbock.

Gemäß einer bevorzugten Maßnahme spannt eine Rückstellfederung zum Rückstellen des Pedalhebels in eine Leerlaufposition die Lagerflächen des Pedalshebels gegen die Lagerflächen des Lagerbocks. Hierdurch wird in den Lagerflächen ein gegen die Betätigungsrichtung des Pedalhebels wirkendes Reibmoment erzeugt, welches sich aufgrund des Betätigungswiderstands positiv auf das Fahrgefühl auswirkt. Weil die Rückstellfederung zugleich die Haltefunktion zum Halten des Pedalhebels am Lagerbock übernimmt, wird die Anzahl der Bauelemente des Fahrpedalmoduls vorteilhaft niedrig gehalten.

Eine Weiterbildung sieht vor, dass der Pedalhebel zwischen zwei, mit dem Lagerbock einstückigen Wangen geführt ist. Neben der seitlichen Führung durch die gestuften Lagerflächen ist hiermit eine zusätzliche seitliche Führung des Pedalhebels am Lagerbock gegeben, wodurch die Steifigkeit der Lagerung weiter verbessert wird.

In besonders zu bevorzugender Weise ist die Sensorwelle mittels wenigstens eines radial durch eine Wandung des Hohlzapfens hindurch ragenden Mitnehmers mit dem Pedalhebel unmittelbar drehgekoppelt, wobei der Mitnehmer entweder mit dem Pedalhebel oder mit der Sensorwelle einstückig ausgeführt ist. Hieraus resultiert ebenfalls eine geringe Zahl an Bauteilen.

Gemäß einer Weiterbildung ist ein Ende der Sensorwelle in der Lagerbohrung des Hohlzapfens und das andere Ende in einem am Lagerbock festgelegten Sensorgehäuse drehgelagert. Dann weist der Hohlzapfen des Lagerbocks einen zum Sensorgehäuse hin offenen Schlitz zum seitlichen Einführen des Mitnehmers auf.

Vorzugsweise wird der Mitnehmer durch einen Mitnehmerstift gebildet, welcher in einer Aufnahme des Pedalhebels oder des Lagerbocks unter Vorspannung umgriffen ist. Dies wird beispielsweise dadurch realisiert, dass die Aufnahme durch ein Sackloch gebildet wird, dessen Querschnitt geringfügig kleiner ist als der Querschnitt des Mitnehmerstifts und wenigstens eine Seitenwand des Sacklochs beim Einführen des Mitnehmerstifts elastisch verformbar ist. Diese Verbindung ist wegen der Vorspannung sehr steif, wodurch sich eine spielfreie Übertragung der Bewegung des Pedalhebels auf die Sensorwelle ergibt. Weil die Rückstellfederung zum Rückstellen des Pedalhebels die Lagerflächen des Pedalshebels gegen die Lagerflächen des Lagerbocks spannt, wird gleichzeitig auch der Mitnehmer in radialer Richtung in die Aufnahme gespannt, so dass der Montageaufwand wegen des völligen Verzichts auf zusätzliche Halte- und Verbindungselemente zwischen Mitnehmer und Pedalhebel bzw. zwischen Mitnehmer und Lagerbock sehr gering ist.

### Zeichnungen

Ausführungsbeispiele sind in den Zeichnungen dargestellt und in der nachfolgenden Beschreibung näher erläutert. In den Zeichnungen zeigt
- Fig.1: eine perspektivische Ansicht eines Pedalhebel und eines Lagerbocks als wesentliche Teile einer bevorzugten Ausführungsform eines Fahrpedalmoduls;
- Fig.2: eine perspektivische Ansicht des am Lagerbock montierten Pedalhebels, wobei der Lagerbock entlang der Linie II-II von Fig.1 aufgeschnitten ist;
- Fig.3: eine Schnittdarstellung des Fahrpedalmoduls entlang der Linie III-III von Fig.2;
- Fig.4: eine Explosionszeichnung einer Ausführungsform des Fahrpedalmoduls entsprechend der Erfindung;
- Fig.5: eine Teilschnittdarstellung entlang der Linie V - V von Fig.4;
- Fig.6: eine Teilschnittdarstellung entlang der Linie VI - VI von Fig.4;
- Fig.7: einen Längsschnitt durch das Fahrpedalmodul von Fig.4.

### Beschreibung der Ausführungsbeispiele

Das erfindungsgemäße Fahrpedalmodul wird zur Steuerung einer Antriebsmaschine, vorzugsweise einer Brennkraftmaschine eines Kraftfahrzeugs verwendet, deren Drosselklappe von einem Stellmotor verstellbar ist. In diesem Fall dient das Fahrpedalmodul zur Erzeugung von elektrischen Signalen für den Stellmotor, um abhängig von der Stellung eines Fahrpedals des Fahrpedalmoduls die Leistung der Brennkraftmaschine zu steuern. Die Antriebsmaschine kann aber auch beispielsweise ein durch elektrische Signale angesteuerter Elektromotor sein.

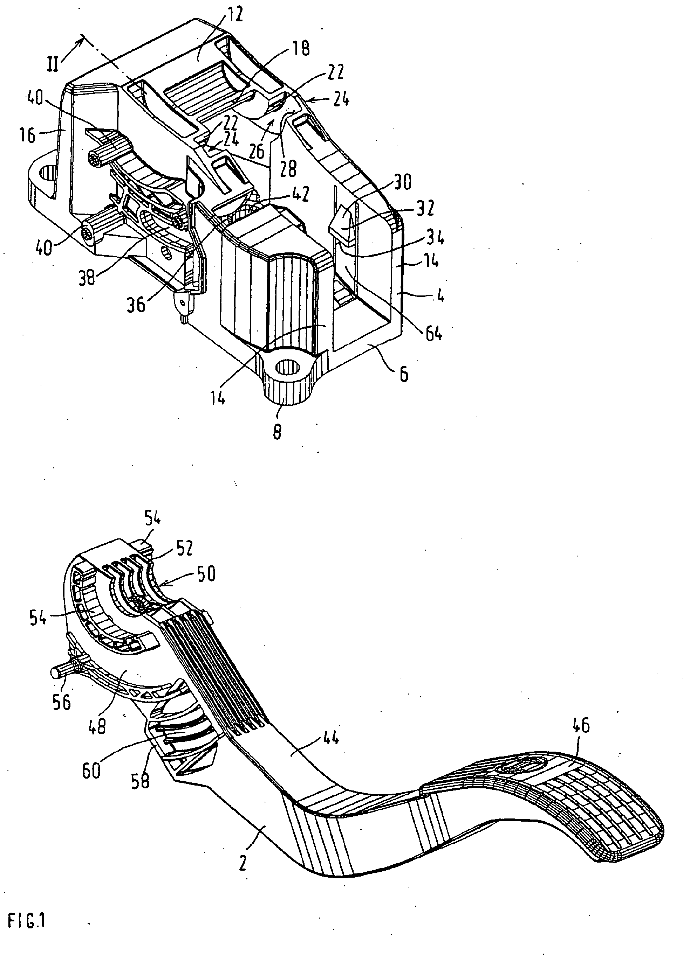

Das Fahrpedalmodul 1 wird von Fahrer des Kraftfahrzeugs fußbetätigt und beinhaltet gemäß Fig.1 einen Pedalhebel 2, welcher vorzugsweise das unmittelbar vom Fahrerfuß betätigte Gaspedal darstellt. Alternativ kann es sich bei dem Pedalhebel 2 um einen Hebel einer weitere Hebel enthaltenden Hebel- oder Gestängemechanik handeln, welcher mit dem Gaspedal gekoppelt ist. Weiterhin umfasst das Fahrpedalmodul 1 einen Lagerbock 4 als Haltestruktur für den Pedalhebel 2, welcher vorzugsweise unmittelbar im Fußbereich des Fahrers mittels von einer Bodenplatte 6 des Lagerbocks seitlich hervorragenden Schraubaugen 8 befestigbar ist. Als weitere Elemente beinhaltet das Fahrpedalmodul 1 einen aus Gründen der Übersichtlichkeit in Fig.1 nicht dargestellten Sensor und Rückstellfederelemente. Darüber hinaus kann das Fahrpedalmodul 1 zusätzlich mit einer Kick-Down-Mechanik für ein automatisches Getriebe des Kraftfahrzeugs versehen sein, welche beispielsweise in der DE 195 36 699 A1 beschrieben ist.

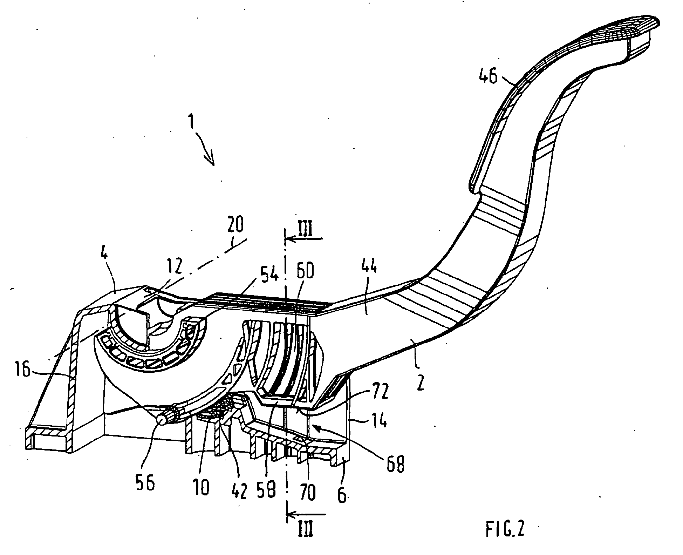

Wie aus dem oberen Teil von Fig.1 hervorgeht, beinhaltet der Lagerbock 4 zwei mit Querabstand parallel zueinander angeordnete, von der Bodenplatte 6 senkrecht wegragende und an den von der Bodenplatte 6 weg weisenden Enden mit einem Quersteg 12 miteinander verbundene Wangen 14. Die Wangen 14 stehen zusätzlich mittels einer ebenfalls senkrecht von der Bodenplatte 6 weg ragenden Stirnplatte 16 miteinander in Verbindung. Der Quersteg 12 trägt an seiner zur Bodenplatte 6 weisenden, unteren Fläche eine zentrale Lagerfläche 18 in Form einer etwa halben Zylinderfläche eines gedachten Zylinders, dessen Mittelachse einer in Fig.2 gezeigten Schwenkachse 20 einer Schwenkverbindung zwischen dem Pedalhebel 2 und dem Lagerbock 4 entspricht. Wangenseitig weist der Quersteg 12 außerdem zwei gegenüber der zentralen Lagerfläche 18 im Durchmesser vergrößerte und ebenfalls etwa durch halbe Zylinderflächen gebildete Lagerflächen 22 auf. Die Lagerflächen 18, 22 weisen allesamt zur Bodenplatte 6 des Lagerbocks 4. Quer zur Schwenkachse 20, d.h. in Längsrichtung des Lagerbocks 4 gesehen, ist jeweils einem Rand der wangenseitigen Lagerflächen 22 ein Einführungsschlitz 24 zu je einer Ringnut 26 nebengeordnet, welche einerseits durch die durchmessergrößere Lagerfläche 22 und andererseits durch eine weitere gegenüberliegende kreisbogenförmige und mit der Schwenkachse 20 koaxiale Lagerfläche 28 begrenzt ist.

In einem entfernt von den Lagerflächen 18, 22, 28 gelegenen Bereich der Wangen 14 sind zwei sich gegenüber liegende, zueinander weisende, in Richtung der Schwenkachse 20 vorspringende Lagerbockanschläge angeordnet, welche vorzugsweise als Keile 30 mit bezüglich zur Schwenkachse 20 etwa in radialer Richtung verlaufenden Keilflächen 32, welche an ihrem maximal vorspringenden Keil-ende jeweils eine vorspringende Stufe 34 in Bezug zur restlichen Wangenfläche bilden. Aufgrund der perspektivischen Ansicht ist in Fig.1 lediglich einer der Keile 30 sichtbar. In einer der Wangen 14 des Lagerbocks ist darüber hinaus ein weiterer Einführungsschlitz 36 vorhanden, welcher in eine teilkreisbogenförmige Durchbrechung 38 der entsprechenden Wange 14 mündet. Benachbart zu der teilkreisförmigen Durchbrechung 38 der Wange 14 ist eine Aufnahme für ein Sensorgehäuse des Sensors vorzugsweise in Form von senkrecht nach außen ragenden Zapfen 40 angeordnet, welche zentrale Sackbohrungen zur Aufnahme von Schrauben aufweisen.

Wie am besten anhand von Fig.2 zu sehen ist, weist die Bodenplatte 6 in einem in Längsrichtung des Lagerbocks 4 gesehen zwischen der Schwenkachse 20 und den Lagerbockanschlägen 30 angeordneten Bereich eine Aufnahme für die Rückstellfederelemente 10 auf, welche vorzugsweise als Zapfen 42 ausgeführt ist. Die beispielsweise als ineinander gesteckte Schraubenfedern ausgebildeten Rückstellfederelemente sind auf den Zapfen 42 aufgesteckt und an ihm zentriert. Der Lagerbock 4 ist vorzugsweise als einstückiger Spritzgußformling aus Kunststoff ausgeführt, d.h., dass sämtliche bisher beschriebenen Elemente wie die Bodenplatte 6, die Stirnplatte 16, die Wangen 14, der Quersteg 12 und insbesondere die Lagerbockanschläge 30 zusammen ein einstückiges Bauteil bilden.

Der im unteren Teil von Fig.1 gezeigte Pedalhebel 2 hat einen Hebelkörper 44, der an seinem freien Ende eine Fußplatte 46 und an einem Pedalhebelkopf 48 mit den Lagerflächen 18, 22, 28 des Lagerbocks 4 zusammenwirkende Lagerflächen, welche eine zentrale, konkave Lagerfläche 50 beinhalten. Diese wird vorzugsweise durch eine Anzahl mit Querabstand parallel zueinander angeordnete Rippen 52 gebildet, deren Stirnflächen zusammen etwa eine halbe Zylinderfläche mit einem Durchmesser bilden, der etwa dem Durchmesser der zentralen Lagerfläche 18 des Lagerbocks 4 entspricht. Die zentrale Lagerfläche 50 des Pedalhebels 2 ist koaxialen, von beiden Seitenflächen des Hebelkörpers 44 weg ragenden und sich jeweils etwa über einen Halbkreisbogen erstreckenden Ringabschnitten 54 zwischengeordnet, deren radial innere Umfangsflächen Lagerflächen bilden. Die Ringabschnitte 54 weisen in einer in Bezug zur Schwenkachse 20 radialen Richtung eine Dicke auf, welche der lichten Weite einer Ringnut 26 des Lagerbocks 4 entspricht.

Weiterhin ragt von dem Pedalhebelkopf 48 ein zapfenförmiger Mitnehmer 56 quer nach außen weg, welcher beispielsweise in einen nicht gezeigten Drehhebel eines Schleifrings eines in dem Sensorgehäuse gehaltenen Potentiometers eingreift, das im vorliegenden Fall beispielsweise den Sensor bildet. In einem den Lagerflächen 50, 54 und der Fußplatte 46 zwischengeordneten Bereich des Hebelkörpers ist an beiden Seitenflächen je ein Pedalhebelanschlag vorhanden, vorzugsweise in Form einer Anschlagkante 58, welche einen in Richtung der Schwenkachse 20 eingezogenen Bereich 60 begrenzt. Der eingezogene Bereich 60 hat ungefähr eine Längserstreckung, welche dem Betätigungsweg des Pedalhebels 2 entspricht und verläuft annähernd radial in Bezug zur Schwenkachse 20. Die Breite des Pedalhebels 2 in der Umgebung des eingezogenen Bereichs 60 entspricht in etwa dem Querabstand der beiden Wangen 14 des Lagerbocks 4. Der Pedalhebel 2 ist vorzugsweise als einstückiger Spritzgußformling aus Kunststoff ausgeführt, d.h., dass sämtliche bisher beschriebenen Elemente wie die Fußplatte 46, die Lagerflächen 50, 54, der Mitnehmer 56, die eingezogenen Bereiche 60 und insbesondere die Pedalhebelanschläge 58 zusammen ein einstükkiges Bauteil bilden.

Zur Herstellung der Schwenkverbindung zwischen dem Pedalhebel 2 und dem Lagerbock 4 werden die am Pedalhebelkopf 48 vorhandenen Ringabschnitte 54 über die Einführungsschlitze 24 in die zugeordneten Ringnuten 26 und der Mitnehmer 56 in den weiteren Einführungsschlitz 36 eingeführt. Dann wird der Pedalhebel 2 relativ zum Lagerbock 4, oder auch umgekehrt, um die Schwenkachse 20 ein Stück weit verdreht, wodurch sowohl die zentralen wie auch die äußeren Lagerflächen 18 bzw. 50 und 22, 28 bzw. 54 am Pedalhebel 2 und am Lagerbock 4 sowie die Seitenflächen am Pedalhebel 2 und an den Wangen 14 des Lagerbocks 4 aneinander zur gleitenden Anlage kommen. Hierdurch entsteht ein Formschluß, welcher lediglich eine Drehung des Pedalhebels 2 relativ zum Lagerbock 4 um die Schwenkachse 20 erlaubt, wobei der Pedalhebel 2 insbesondere aufgrund der beiden Ringabschnitt- Ringnut-Paarungen 26, 54 zwangsgeführt und abgestützt ist. Zuvor werden die Rückstellfederelemente 10 einerseits auf den Zapfen 42 in der Bodenplatte 6 des Lagerbocks 4 und andererseits auf einen in Montageposition gegenüberliegenden, in den Figuren nicht sichtbaren Zapfen des Pedalhebels 2 aufgesetzt.

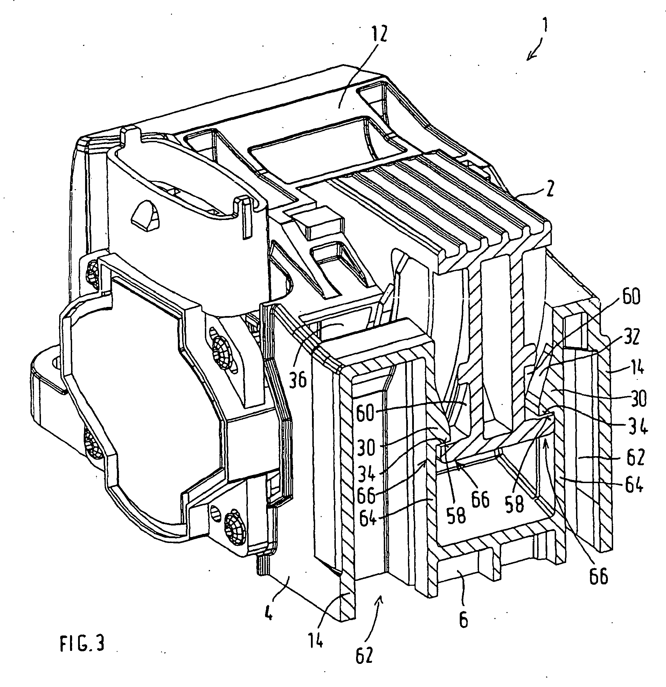

Allgemein sind im Bereich des Pedalhebelanschlags 58 und/oder des Lagerbockanschlags 30 derartige Elastizitäten vorhanden, dass während der um die Schwenkachse 20 ausgeführten Relativdrehbewegung zwischen dem Pedalhebel 2 und dem Lagerbock 4 zur Herstellung der Schwenkverbindung der Pedalhebelanschiag 58 am Lagerbockanschlag 30 bedingt durch elastische Verformungen vorbeigleitet und ihn nach Rückfederung hintergreift. Da im vorliegenden Fall die Breite des Pedalhebels 2 in etwa dem Abstand der beiden Wangen 14 entspricht und die als Lagerbockanschläge fungierenden Keile 30 von den pedalhebelseitigen Anschlagkanten 58 im Laufe der Relativdrehung zur Herstellung der Schwenkverbindung passiert werden müssen, sind die Wandungen der Wangen 14 im Bereich der Keile 30 doppelwandig ausgeführt, wodurch sie Hohlräume 62 aufweisen, wie in Fig.3 gezeigt ist. Weiterhin sind die Keile 30 dünnen Streifen 64 angeformt, welche durch Schlitze von der übrigen Wandung getrennt sind. Hierdurch können die Keile 30 bedingt durch elastische Verformungen der Streifen 64 in die Hohlräume 62 zurückweichen, wenn die Anschlagkanten 58 entlang der sich in Richtung der zur Herstellung der Schwenkverbindung vorgesehenen Relativdrehbewegung allmählich erweiternden Keilflächen 32 gleiten. Die elastische Verformung der Wangen 14 findet folglich hauptsächlich in dem lokal begrenzten Bereich der Streifen 64 statt, fern von den Lagerflächen 18, 22, 28 bzw. 50, 54 der Schwenkverbindung.

Da der Pedalhebel 2 am Lagerbock 4 insbesondere durch die Ringabschnitt-Ringnut-Paarungen 26, 54 zwangsgeführt ist und keine andere Bewegung als eine Drehung um die Schwenkachse 20 ausführen kann, ist er vorteilhaft abgestützt und kann nicht in andere Richtungen ausweichen. Der während des Einschiebens der Ringabschnitte 54 des Pedalhebels 2 in die Einführungsschlitze 24 des Lagerbocks 4 zuerst mit den Ringnuten 26 in Eingriff kommende Teil fungiert folglich anfangs als Zwangsführung zur Montageerleichterung bei der Überwindung der durch die elastischen Verformungen bedingten Kräfte. Der Pedalhebel 2 ist folglich an dem Lagerbock 4 mittels der Lagerflächen 18, 22, 28 bzw. 50, 54 der Schwenkverbindung bereits abgestützt, bevor die Pedalanschläge 58 an den Lagerbockanschlägen 30 vorbeigleiten.

Anstatt nur die Bereiche elastisch auszubilden, welchen die Keile 30 angeformt sind, könnten zusätzlich auch die Keile 30 selbst und/oder die Anschlagkanten 58 elastisch ausgebildet werden. Entscheidend ist lediglich, dass die Keile 30 und die Anschlagkanten einander passieren können. Denkbar sind beispielsweise auch in den Wangen 14 geführte und federvorgespannte Keile 30 als separate Bauteile.

Wenn die Anschlagkanten 58 im Rahmen der weiteren Relativdrehung die Keile 30 vollständig passiert haben, treten die Keile 30 durch Rückfederung der Streifen 64 wieder aus den Hohlräumen 62 hervor, wobei - ähnlich wie bei einem Schnappverschluss ― die endseitigen Stufen 34 der Keile 30 die zugeordneten Anschlagkanten 58 hintergreifen und die Keile 30 in die seitlich eingezogenen Bereiche 60 mit Spiel hineinragen, wie in Fig.3 gezeigt ist. Damit ist die Schwenkverbindung zwischen dem Pedalhebel 2 und dem Lagerbock 4 fertiggestellt und der Pedalhebel 2 kann die erforderlichen Schwenkbewegungen ohne Behinderung ausführen. Die Rückstellfederelemente 10 werden während der in Richtung des schließenden Schnappverschlusses vollzogenen Relativdrehbewegung zusammengepreßt und üben eine Rückstellkraft auf den Pedalhebel 2 aus. Nach Fertigstellung der Schnappverbindung schlagen folglich die Stufen 34 der Keile 30 an den Anschlagkanten 58 in entgegengesetzter Drehrichtung an und sorgen für einen Formschluss, welcher verhindert, dass die Anschlagkanten 58 die vorspringenden Stufen 34 der Keile 30 wieder passieren und die einmal fertig gestellte Schwenkverbindung wieder aufgelöst wird, wie insbesondere anhand der Schnittdarstellung von Fig.3 leicht vorstellbar ist. Der Schnappverschluss bildet folglich einen Bestandteil der Schwenkverbindung, ohne den sie nicht fertiggestellt wäre. Falls erforderlich, kann jedoch die Schwenkverbindung bzw. der Schnappverschluss durch Aufspreizen der beiden Wangen 14 des Lagerbocks wieder gelöst werden, wozu allerdings geeignetes Werkzeug notwendig ist. Im fertig montierten Zustand ist folglich der Pedalhebelanschlag 58 gegen den Lagerbockanschiag 30 entgegen einer Pedalbetätigungsrichtung federnd vorgespannt, wobei der Pedalanschlag 58 und der Lagerbockanschlag 30 zusammen einen Leerlaufanschlag 66 des Fahrpedalmoduls 1 bilden, so dass sich der Pedalhebel 2 gemäß der in Fig.3 gezeigten Lage in Leerlaufstellung befindet.

Ein Vollastanschlag 68 des Fahrpedalmoduls 1 beinhaltet auf Seiten des Lagerbocks 4 einen planen Abschnitt 70 der Bodenplatte 6, der einem nach unten leicht auskragenden Abschnitt 72 des Pedalhebels 2 gegenüberliegt und diesen bei voll niedergerücktem Pedalhebel 2 kontaktiert, wie anhand von Fig.2 leicht vorstellbar ist. Die eingezogenen Bereiche 60 des Pedalhebels haben in Umfangsrichtung der Drehbewegung gesehen eine Erstreckung, welche die gesamte Pedalhebelbewegung zwischen Leerlauf- und Vollastanschlag 66, 68 umfasst. Durch Betätigung des Pedalhebels 2 wird außerdem der Mitnehmer 56 entlang der teilkreisbogenförmigen Durchbrechung 38 der Wange 14 des Lagerbocks 4 bewegt, wobei er den Drehhebel des Schleifrings des Potentiometers mitnimmt, welches daraufhin vom Betätigungsweg abhängige elektrische Signale für das Motorsteuergerät erzeugt.

Angesichts der obigen Ausführungen ist klar, dass die Schwenkverbindung zwischen dem Pedalhebel 2 und dem Lagerbock 4 durch eine einzige Drehbewegung um eine Schwenkachse 20 zustande kommt, wobei diese Schwenkbewegung gleichzeitig den Schnappverschluss herstellt, welcher zugleich als Leerlaufanschlag 66 fungiert.

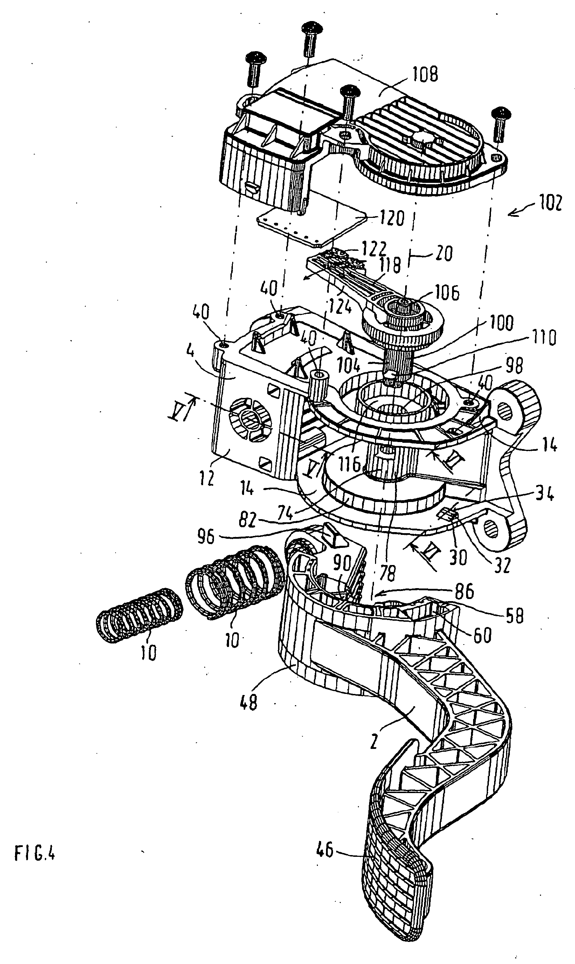

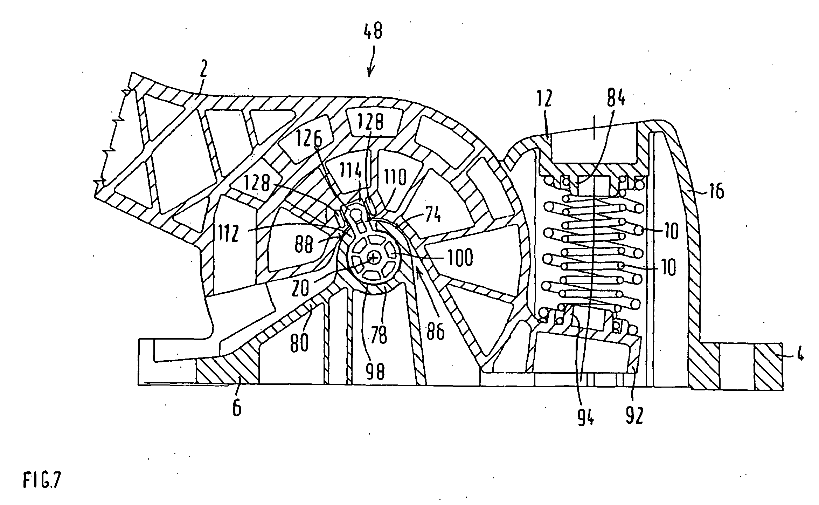

Bei einem Ausführungsbeispiel der Erfindung nach den Fig.4 bis 6 sind die gegenüber dem vorhergehenden Beispiel gleichbleibenden und gleichwirkenden Teile durch die gleichen Bezugszeichen gekennzeichnet. Im Unterschied zu diesem wird die zentrale Lagerfläche des Lagerbocks 4 durch die radial äußere Umfangsfläche 74 eines mit der Schwenkachse 20 der Schwenkverbindüng koaxialen Hohlzapfens 78 gebildet, welcher auf einem von der Bodenplatte 6 nach oben weg ragenden Vorsprung 80 gehalten ist, wie am besten in Fig.7 zu sehen ist. Der Hohlzapfen 78 erstreckt sich zwischen den Wangen 14 des Lagerbocks 4 und ist, ohne dass ihn eine Querwand verdecken würde, von oben her frei zugängig (Fig.4). Wie beim vorangehend beschriebenen Ausführungsbeispiel sind an den Wangen 14 zueinander weisende Keile 30 entfernt von der durch den Hohlzapfen 78 gebildeten Lagerfläche angeordnet. Die Wangen 14 weisen im Bereich der Keile 30 eine relativ geringe Wandstärke auf, wodurch eine seitliche Nachgiebigkeit gegeben ist.

Neben dem Hohlzapfen 78 sind am Lagerbock 4 jeweils an die zugeordnete Wange 14 angrenzend zwei weitere Lagerflächen in Form von Teilzylinderflächen 82 größeren Durchmessers ausgebildet, von welchen in Fig.4 lediglich eine sichtbar ist. In dem bezogen auf die Lagerbockanschläge 30 jenseits des Hohlzapfens 78 angeordneten Quersteg 12 ist eine Aufnahme für Rückstellfederelemente 10, bestehend aus zwei ineinander gesteckten Schraubenfedern in Form eines Zentrierzapfens 84 ausgebildet, an welchem die Schraubenfederenden aufgenommen sind, wie Fig.7 zeigt.

Ebenfalls aus Fig.7 geht hervor, dass der zylinderförmige Pedalhebelkopf 48 eine kreissektorförmige Ausnehmung 86 aufweist, welche in beispielsweise drei mit der Schwenkachse 20 koaxiale teilzylindrische Lagerflächen mündet. Diese Lagerflächen beinhalten eine zentrale, mit dem Hohlzapfen 78 durchmessergleiche Lagerfläche 88 sowie in axialer Richtung gesehen an deren Enden je eine weitere Lagerfläche 90 größeren Durchmessers, der dem Durchmesser der beiden äußeren Lagerflächen 82 des Lagerbocks 4 entspricht. Weiterhin ist der Pedalhebelkopf 48 mit einem sich in Pedalhebellängsrichtung erstreckenden Fortsatz 92 versehen, welcher eine Aufnahme für die Rückstellfederelemente 10 in Form eines weiteren Zentrierzapfens 94 trägt, wie am besten anhand von Fig.7 zu sehen ist. In Fig.4 ist außerdem der seitlich eingezogene Bereich 60 des Pedalhebels 2 sichtbar, der von der Anschiagkante 58 begrenzt ist.

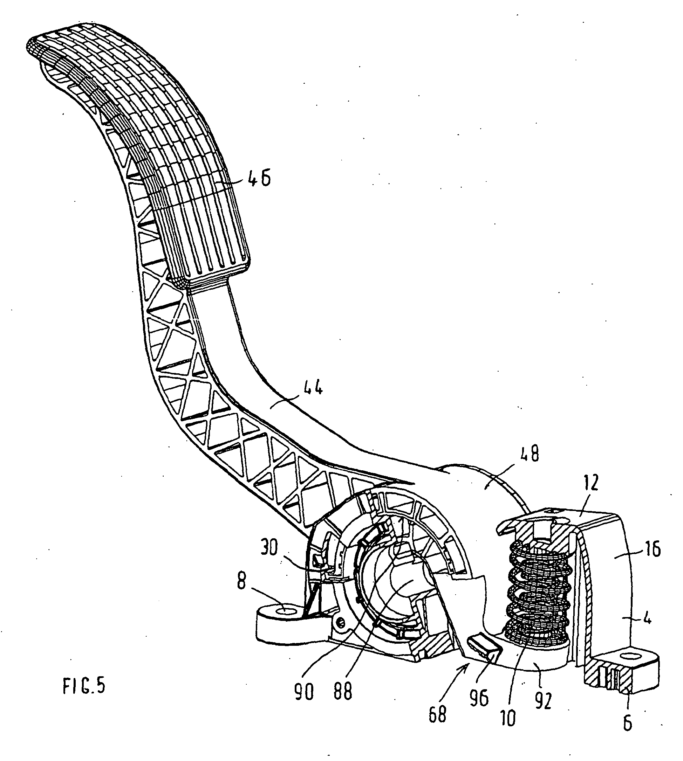

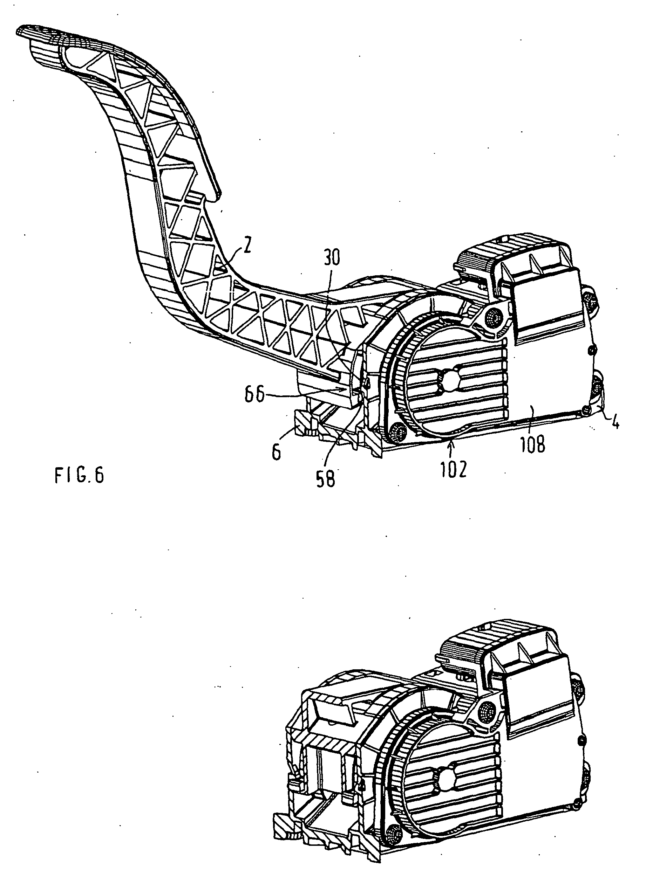

Zur Herstellung der Schwenkverbindung wird der Pedalhebel 2 mit seinen drei teilzylindrischen Lagerflächen 88, 90 über die radiale Ausnehmung 86 auf die zugeordneten Lagerflächen 74, 82 des Lagerbocks 4 gesetzt. Gleichzeitig werden die Rückstellfederelemente 10 auf den Zentrierzapfen 84, 94 platziert, wozu sie zusammengedrückt werden müssen. Die aufgrund der Längenänderung der Rückstellfederelemente 10 erzeugte Druckkraft sorgt dafür, dass der Pedalhebel 2 am Lagerbock 4 gehalten und die einander zugeordneten Lagerflächen 88, 90 bzw. 74, 82 gegeneinander vorgespannt sind. Die Anschlagkanten 58 des Pedalhebels 2 befinden sich dabei in einer Position, in welcher sie die Keile 30 noch nicht passiert haben. Aus dieser Lage wird nun der Pedalhebel 2 bezogen auf die Darstellung von Fig.6 gegen den Uhrzeigersinn verdreht, wobei die Anschlagkanten 58 entlang der ansteigenden Keilflächen 32 der Keile 30 gleiten und die Wangen 14 unter elastischer Verformung nach außen ausweichen. Nachdem die Anschlagkanten 58 die Stufen 34 der Keile 30 passiert haben, federn die Wangen 14 nach innen zurück und die Anschlagkanten 58 hintergreifen die Stufen 34 der Keile 30, wie beim vorangehenden Ausführungsbeispiel beschrieben. Auch bilden die Anschlagkanten 58 zusammen mit den zugeordneten Keilen 30 den Leerlaufanschlag 66 des Fahrpedalmoduls 1 sowie einen Schnappverschluss der durch die Drehbewegung zustande gekommenen Schwenkverbindung. In Fig.5 ist außerdem ein vom Fortsatz 92 des Pedalhebelkopfes 48 seitlich weg ragender Keil 96 erkennbar, welcher an einem nicht dargestellten Anschlag des Lagerbocks 4 in Vollaststellung des Pedalhebels 2 anschlägt und sich bereits durch Aufsetzen des Pedalhebels 2 auf den Lagerbock 4 in Arbeitsposition befindet, ohne dass hierzu eine Relativdrehbewegung notwendig wäre. Der Keil 96 am Pedalhebel 2 und der zugeordnete Anschlag am Lagerbock 4 bilden zusammen daher einen Vollastanschlag des Fahrpedalmoduls.

Bei beiden Ausführungsformen spannen die Rückstellfederelemente 10 die einander zugeordneten Lagerflächen 18, 22, 50, 54 (Fig.1 bis Fig.3) bzw. 74, 82, 88, 90 (Fig.4 bis Fig.7) gegeneinander. Folglich entsteht in der Schwenklagerung ein gegen die Betätigungsbewegung gerichtetes Reibmoment, welches unter anderem vom Reibungskoeffizienten der Lagerflächen und dem Durchmesser der Lagerflächen abhängt. Hierdurch wird wie bei Fahrpedalen mit rein mechanischen Übertragungsmitteln eine Reibhysterese erzeugt, welche sich vorteilhaft auf das Fahrgefühl auswirkt. Vorzugsweise werden wenigstens einige der Lagerflächen 18, 22, 50, 54 (Fig.1 bis Fig.3) bzw. 74, 82, 88, 90 (Fig.4 bis Fig.7) mit einem geeigneten Reibbelag versehen, was bei der Herstellung des Spritzgußformlings beispielsweise durch Einlegen in die Form geschehen kann, so dass der Reibbelag bereits in die Lagerfläche 18, 22, 50, 54 (Fig.1 bis Fig.3) bzw. 74, 82, 88, 90 (Fig.4 bis Fig.7) integriert ist. Dann besteht das Fahrpedalmodul 1 gemäß der vorangehend beschriebenen Ausführungsformen lediglich aus 4 unterschiedlichen Bauteilen, nämlich dem Pedalhebel 2, dem Lagerbock 4, dem Sensor 102 und den Rückstellfederelementen 10.

Der als Hohlzapfen 78 ausgeführte Zapfen ist mit dem Lagerbock 4 und insbesondere mit dessen Bodenplatte 6 einstückig ausgeführt und weist eine zur Schwenkachse 20 koaxiale Lagerbohrung 98 für eine Sensorwelle 100 eines vorzugsweise als Drehpotentiometer ausgebildeten Drehsenors 102 in Form einer Sacklochbohrung auf, in welcher zumindest ein Teil der Sensorwelle 100 unmittelbar, d.h. ohne Zwischenordnung von Lagerbuchsen drehbar gelagert ist, wie aus Fig.7 hervorgeht. Folglich ist die Sensordrehachse koaxial mit der Schwenkachse 20 der Schwenkverbindung zwischen dem Pedalhebel 2 und dem Lagerbock 4. Vorzugsweise ist ein Endabschnitt 104 der Sensorwelle 100 in der Lagerbohrung 98 aufgenommen, während der andere Endabschnitt 106 der Sensorwelle 100 in einem am Lagerbock 4 beispielsweise mittels Schrauben an der zugeordneten Aufnahme 40 befestigten Senorgehäuse 108 drehgelagert ist, wie am besten die Explosionszeichnung von Fig.4 zeigt.

Die innerhalb des Hohlzapfens 78 drehgelagerte Sensorwelle 100 und der auf dem Hohlzapfen 78 drehgelagerte Pedalhebelkopf 48 sind durch einen Mitnehmer 110 unmittelbar miteinander drehgekoppelt, um die Drehbewegungen des Pedalhebels 2 im wesentlichen spielfrei und linear auf die Sensorwelle 100 zu übertragen. Dies kann beispielsweise dadurch realisiert sein, dass ein von der Sensorwelle 100 radial weg ragender Mitnehmerstift 110 einen Schlitz 112 in der Wandung des Hohlzapfens 78 durchragt und in einer Aufnahme 114 in der zentralen Lagerfläche 88 des Pedalhebelkopfes 48 unmittelbar aufgenommen ist. Der Schlitz 112 besitzt eine Erstreckung in Umfangsrichtung, welche eine ungehinderte Bewegung des Pedalhebels 2 zwischen dem Leerlaufanschlag 66 und dem Vollastanschlag erlaubt. Damit der Sensorhebel 2 trotz des radial weg ragenden Mitnehmerstifts 110 seitlich in die Lagerbohrung 98 des Hohlzapfens 78 eingesetzt werden kann, erstreckt sich der Schlitz 112 in Richtung der Schwenkachse 20 gesehen bis an das Ende des Hohlzapfens 78, welches dem Sensorgehäuse 108 gegenüberliegt. Weiterhin hat die zum Sensorgehäuse 108 weisende Wange 14 des Lagerbocks 4 ein mit der Sensorwelle 100 koaxiales Durchgangsloch 116, so dass die Sensorwelle 100 durch einfaches seitliches Einschieben in die Lagerbohrung 98 unter gleichzeitigem Fluchten des Mitnehmerstifts 110 mit dem Schlitz 112 montierbar ist.

Von der Sensorwelle 100 ragt ein mit ihr vorzugsweise einstückiger Sensorhebel 118 weg, welcher an seinem freien Ende mit einer Sensorplatte 120 zugewandten Schleifkontakten 122 eines Schleifers 124 versehen ist. Durch Drehung des Schleifers 124 relativ zur Sensorplatte 120 können in bekannter Weise stufenlos Widerstandswerte eingestellt werden.

Der Querschnitt des Mitnehmerstifts 110 ist vorzugsweise gegenüber seinem durch den Schlitz 112 der Wandung des Hohlzapfens 78 durchragenden Teil an seinem Kopf 126 etwas erweitert und greift in die Aufnahme 114 in der zentralen Lagerfläche 88 des Pedalhebelkopfes 48 ein. Diese Aufnahme ist vorzugsweise durch eine radial verlaufendes Sackloch 114 gebildet, dessen Querschnitt etwas kleiner als der Querschnitt des Kopfes 126 des Mitnehmerstifts 110 ausgebildet ist. Dann ist der Mitnehmerstift 110 in der Aufnahme 114 unter Vorspannung umgriffen, wenn beispielsweise wenigstens eine Seitenwand des Sacklochs 114 sich beim Einführen des Mitnehmerstifts 110 elastisch verformen kann. Im vorliegenden Fall sind zwei einander gegenüberliegende Seitenwände des Sacklochs 114 unter Bildung je eines Hohlraums 128 doppelwandig ausgeführt, wie aus Fig.7 hervorgeht. Dann kann die vorzugsweise dünn ausgeführte Seitenwand des Sacklochs 114 unter elastischer Verformung seitlich nachgeben, wenn der im Querschnitt erweiterte Kopf 126 des Mitnehmerstifts 110 eingesteckt wird. Selbstverständlich kann der Mitnehmerstift 110 anstatt mit der Sensorwelle 100 auch mit dem Pedalhebel 2 verbunden und vorzugsweise mit diesem einstückig ausgeführt und in einer in der Sensorwelle 100 ausgebildeten Aufnahme aufgenommen sein.

## Patentansprüche

1. Fahrpedalmodul (1) zum Steuern der Leistung einer Antriebsmaschine, insbesondere einer Brennkraftmaschine eines Fahrzeugs, mit einem an einem Lagerbock (4) um eine Schwenkachse (20) drehbar gehaltenen Pedalhebel (2), welcher eine mit der Schwenkachse (20) koaxiale Sensorwelle (100) eines Drehsensors (102) betätigt, **dadurch gekennzeichnet, dass** zumindest ein Teil (104) der Sensorwelle (100) unmittelbar in einer Lagerbohrung (98) eines mit dem Lagerbock (4) einstückigen Lagerbereichs (78) drehgelagert ist, von welchem zumindest ein Teil der radial äußeren Umfangsfläche wenigstens eine Lagerfläche (74, 82) für den Pedalhebel (2) bildet.

2. Fahrpedalmodul nach Anspruch 1, **dadurch gekennzeichnet, dass** der Lagerbereich durch einen mit der Schwenkachse (20) koaxialen Hohlzapfen (78) des Lagerbocks (4) gebildet wird.

3. Fahrpedalmodul nach Anspruch 2, **dadurch gekennzeichnet, dass** an der radial äußeren Umfangsfläche des Hohlzapfens (78) mehrere teilzylindrische Lagerflächen (74, 82) unterschiedlichen Durchmessers ausgebildet sind.

4. Fahrpedalmodul nach Anspruch 3, **dadurch gekennzeichnet, dass** komplementäre, mit der Schwenkachse (20) koaxiale und teilzylindrische Lagerflächen (88, 90) des Pedalshebels (2) den Lagerflächen (74, 82) des Hohlzapfens (78) zugeordnet sind.

5. Fahrpedalmodul nach Anspruch 4, **dadurch gekennzeichnet, dass** eine Rückstellfederung (10) zum Rückstellen des Pedalhebels (2) in eine Leerlaufposition die Lagerflächen (88, 90) des Pedalshebels (2) gegen die Lagerflächen (74, 82) des Lagerbocks (4) spannt.

6. Fahrpedalmodul nach Anspruch 5, **dadurch gekennzeichnet, dass** der Pedalhebel (2) zwischen zwei, mit dem Lagerbock (4) einstückigen Wangen (14) geführt ist.

7. Fahrpedalmodul nach Anspruch 6, **dadurch gekennzeichnet, dass** die Sensorwelle (100) mittels wenigstens eines radial durch eine Wandung des Hohlzapfens (78) hindurch ragenden Mitnehmers (110) mit dem Pedalhebel (2) unmittelbar drehgekoppelt ist.

8. Fahrpedalmodul nach Anspruch 7, **dadurch gekennzeichnet, dass** ein Ende (104) der Sensorwelle (100) in der Lagerbohrung (98) des Hohlzapfens (78) und das andere Ende (106) in einem am Lagerbock (4) festgelegten Sensorgehäuse (108) drehgelagert ist.

9. Fahrpedalmodul nach Anspruch 8, **dadurch gekennzeichnet, dass** der Mitnehmer (110) entweder mit dem Pedalhebel (2) oder mit der Sensorwelle (100) einstückig ausgeführt ist.

10. Fahrpedalmodul nach Anspruch 9, **dadurch gekennzeichnet, dass** der Hohlzapfen (78) des Lagerbocks (4) einen zum Sensorgehäuse (108) hin offenen Schlitz (112) zum seitlichen Einführen des Mitnehmers (110) aufweist.

11. Fahrpedalmodul nach Anspruch 10, **dadurch gekennzeichnet, dass** der Mitnehmer durch einen Mitnehmerstift (110) gebildet wird, welcher in einer Aufnahme (114) des Pedalhebels (2) oder des Lagerbocks (4) unter Vorspannung umgriffen ist.

12. Fahrpedalmodul nach Anspruch 11, **dadurch gekennzeichnet, dass** die Aufnahme durch ein Sackloch (114) gebildet wird, dessen Querschnitt geringfügig kleiner ist als der Querschnitt des Mitnehmerstifts (110) und wenigstens eine Seitenwand des Sacklochs beim Einführen des Mitnehmerstifts (110) elastisch verformbar ist.

## Claims

1. Accelerator pedal module (1) for controlling the power of an engine, in particular an internal combustion engine of a vehicle, with a pedal lever (2) which is held on a bearing bracket (4) in a manner such that it can rotate about a pivot axis (20) and actuates a sensor shaft (100) of a rotation sensor (102), which sensor shaft is coaxial with the pivot axis (20), **characterized in that** at least a part (104) of the sensor shaft (100) is mounted rotationally directly in a bearing bore (98) of a bearing region (78) which is integral with the bearing bracket (4) and of which at least one part of the radially outer circumferential surface forms at least one bearing surface (74, 82) for the pedal lever (2).

2. Accelerator pedal module according to Claim 1, **characterized in that** the bearing region is formed by a hollow pin (78) of the bearing bracket (4), which hollow pin is coaxial with the pivot axis (20).

3. Accelerator pedal module according to Claim 2, **characterized in that** a plurality of partially cylindrical bearing surfaces (74, 82) of different diameter are formed on the radially outer circumferential surface of the hollow pin (78).

4. Accelerator pedal module according to Claim 3, **characterized in that** complementary, partially cylindrical bearing surfaces (88, 90) of the pedal lever (2), which bearing surfaces are coaxial with the pivot axis (20), are assigned to the bearing surfaces (74, 82) of the hollow pin (78).

5. Accelerator pedal module according to Claim 4, **characterized in that** a restoring spring suspension system (10) for restoring the pedal lever (2) into an idling position stresses the bearing surfaces (88, 90) of the pedal lever (2) against the bearing surfaces (74, 82) of the bearing bracket (4).

6. Accelerator pedal module according to Claim 5, **characterized in that** the pedal lever (2) is guided between two cheeks (14) integral with the bearing bracket (4).

7. Accelerator pedal module according to Claim 6, **characterized in that** the sensor shaft (100) is directly rotationally coupled to the pedal lever (2) by means of at least one driver (110) protruding radially through a wall of the hollow pin (78).

8. Accelerator pedal module according to Claim 7, **characterized in that** one end (104) of the sensor shaft (100) is mounted rotationally in the bearing bore (98) of the hollow pin (78) and the other end (106) is mounted rotationally in a sensor housing (108) fixed to the bearing bracket (4).

9. Accelerator pedal module according to Claim 8, **characterized in that** the driver (110) is formed integrally either with the pedal lever (2) or with the sensor shaft (100).

10. Accelerator pedal module according to Claim 9, **characterized in that** the hollow pin (78) of the bearing bracket (4) has a slot (112) open towards the sensor housing (108) for the lateral insertion of the driver (110).

11. Accelerator pedal module according to Claim 10, **characterized in that** the driver is formed by a drive pin (110) which is gripped under prestress in a mount (114) in the pedal lever (2) or of the bearing bracket (4).

12. Accelerator pedal module according to Claim 11, **characterized in that** the mount is formed by a blind hole (114), the cross section of which is slightly smaller than the cross section of the driver pin (110), and at least one side wall of the blind wall can be deformed elastically when the driver pin (110) is inserted.

## Revendications

1. Module d'accélérateur (1) pour commander la puissance d'un moteur d'entraînement, en particulier d'un moteur à combustion interne d'un véhicule, comprenant un levier de pédale (2) maintenu en rotation sur un support de palier (4) autour d'un axe de basculement (20) et actionnant un arbre de capteur (100) d'un capteur de rotation (102) coaxial à l'axe de basculement (20),
**caractérisée en ce qu'**
au moins une partie (104) de l'arbre de capteur (100) est montée directement en rotation dans un perçage de palier (98) d'une zone de palier (78) formée d'une seule pièce avec le support de palier (4), où au moins une partie de la surface périphérique radiale extérieure forme au moins une surface de palier (74, 82) pour le levier de pédale (2).

2. Module d'accélérateur selon la revendication 1,
**caractérisée en ce que**
la zone de palier est formée par un pivot creux (78) du support de palier (4) qui est coaxial à l'axe de basculement (20).

3. Module d'accélérateur selon la revendication 2.
**caractérisé en ce que**
plusieurs surfaces de palier (74, 82) de diamètre différent et partiellement cylindriques sont formées sur la surface périphérique radiale extérieure du pivot creux (78).

4. Module d'accélérateur selon la revendication 3,
**caractérisé en ce que**
des surfaces de palier complémentaires (88, 90) du levier de pédale (2), coaxiales à l'axe de basculement (20) et partiellement cylindriques, sont associées aux surfaces de palier (74, 82) du pivot creux (78).

5. Module d'accélérateur selon la revendication 4,
**caractérisé en ce qu'**
un ressort de rappel (10) servant à ramener le levier de pédale (2) dans une position de ralenti tend les surfaces de palier (88, 90) du levier de pédale (2) contre les surfaces de palier (74, 82) du support de palier (4).

6. Module d'accélérateur selon la revendication 5,
**caractérisé en ce que**
le levier de pédale (2) est guidé entre deux joues (14) formées d'une seule pièce avec le support de palier (4).

7. Module d'accélérateur selon la revendication 6,
**caractérisé en ce que**
l'arbre de capteur (100) est directement couplé en rotation avec le levier de pédale (2) à l'aide d'au moins un élément d'entraînement (110) radial dépassant à travers une paroi du pivot creux (78).

8. Module d'accélérateur selon la revendication 7,
**caractérisé en ce qu'**
une extrémité (104) de l'arbre de capteur (100) est montée en rotation dans le perçage de palier (98) du pivot creux (78) et l'autre extrémité (106) dans un boîtier de capteur (108) fixé au support de palier (4).

9. Module d'accélérateur selon la revendication 8,
**caractérisé en ce que**
l'élément d'entraînement (110) est réalisé d'une seule pièce soit avec le levier de pédale (2), soit avec l'arbre de capteur (100).

10. Module d'accélérateur selon la revendication 9,
**caractérisé en ce que**
le pivot creux (78) du support de palier (4) présente une fente (112) ouverte vers le boîtier de capteur (108) pour introduire latéralement l'élément d'entraînement (110).

11. Module d'accélérateur selon la revendication 10,
**caractérisé en ce que**
l'élément d'entraînement est un ergot d'entraînement (110) reçu sous précontrainte dans une réception (114) du levier de pédale (2) ou du support de palier (4).

12. Module d'accélérateur selon la revendication 11,
**caractérisé en ce que**
la réception est formée par un trou borgne (114) de section légèrement inférieure à celle de l'ergot d'entraînement (110) et au moins une paroi latérale du trou borgne peut être déformée élastiquement en introduisant l'ergot d'entraînement 110).
